# EUROPEAN PATENT SPECIFICATION

(11) **EP 0 363 301 B1**
(45) Date of publication and mention of the grant of the patent: **09.07.1997**
(21) Application number: 89630151.2
(22) Date of filing: 13.09.1989
(51) Int. Cl.: F02C 9/54, F02K 1/17

(54) **Control system for gas turbine engines**
Steuervorrichtung für Gasturbinenanlagen
Système de commande pour turbines à gaz

(30) Priority: 20.09.1988 US 246765; 20.09.1988 US 246728; 20.09.1988 US 246730
(43) Date of publication of application: 11.04.1990
(73) Proprietor: UNITED TECHNOLOGIES CORPORATION, Hartford, CT 06101 (US)
(72) Inventor: Pollak, Robert R., North Palm Beach Florida 33408 (US); Marcos, Juan A., Jupiter Florida 33458 (US); Khalid, Syed J., Palm Beach Gardens Florida 33410 (US)
(74) Representative: Waxweiler, Jean

(56) References cited:
- EP-A- 0 277 904
- EP-A- 0 279 487
- US-A- 2 918 790
- US-A- 3 110 229
- US-A- 4 242 864

## Description

This invention relates to gas turbine aircraft engines, more particularly to engine control systems.

Gas turbine engine control systems are well known in the art. These control systems are specially configured for use with a particular civilian or military aircraft application. For example, fighter aircraft must be capable of undergoing violent maneuvers which require changes in engine power with corresponding changes in engine thrust to severely accelerate or decelerate the aircraft. To perform these maneuvers, the pilot must execute sudden power lever movements usually referred to as "bodies", "chops" or "snaps". These power lever movements produce extreme engine speed, temperature and air flow excursions. Engine controllers for fighter aircraft must provide maximum engine response as quickly as possible.

Electronic controls of the digital variety are disclosed in US Patent No. 4,242,864 and European patent application publication No. 0277904. The control in the 4,242,864 patent is for a gas turbine engine with a variable pitch fan and serves to control the inlet throat Mach number, thrust and fan speed. The engine's inlet throat Mach number is controlled by sensing a plurality of engine operating variables in order to adjust the exit area of the fan, the thrust is controlled by regulating the fuel flow to the engine's burner in response to engine operating variables, and the rotational speed of the fan is obtained by controlling the pitch of the fan blades in response to engine operating variables. The integrated control primarily coordinates these parameters in order to control the operation of the engine and develop the requisite thrust for aircraft operation.

The control system disclosed in European Patent Application publication 0 277 904 is basically for a gas turbine engine for overriding the primary engine control in order to increase the engine's responsiveness during certain fighter aircraft flight maneuvers while at the same time improving the life of the engine. The primary control regulates fuel flow and the engine's variable area exhaust nozzle in accordance with a predetermined schedule obtained by sensing engine operating parameters in order to develop the prerequisite thrust. The secondary system is only operable when the power control lever operated by the pilot advances or decreases beyond a given rate of change. When this occurs, the secondary system overrides the primary system to place the fuel flow and the variable area exhaust nozzle on a different schedule. The new schedule would open the exhaust nozzle to the full open position and concomitantly change fuel flow to attain a higher engine speed, so that when the power lever is positioned to the new desired engine's requirement the engine will be readied for a quick response.

An example of an engine used in fighter aircraft is the F100 engine manufactured by Pratt & Whitney Aircraft, a division of The United Technologies Corporation, the assignee of the present application. The F100 engine is a multiple spool axial flow turbine power plant having a fan jet engine configuration. The engine is characterized by a fan or low compressor coaxial with a high compressor rotor. Both the fan and high compressor have vanes whose angles are adjustable while the rotor blades are moving. The engine also has a variable area exhaust nozzle.

During operation, the rotor speeds of the fan and high pressure compressor rotors will vary from a high speed (intermediate or military power) to a low speed (part power or idle power). To accomplish the dramatic changes in engine power output, not only are the fan and high compressor vanes changing position with the speed of the respective rotor,the variable exhaust nozzle is also changing area, as the amount of fuel provided to the engine combustor varies from a high value to a low value. For example, a "chop" in desired thrust would schedule the engine to reduce power from a military power condition, e.g. 12000lbs. of thrust, to 4,000lbs of thrust by reducing the amount of fuel to the combuster of the engine and increasing the exhaust nozzle area. The fan and high compressor rotor speeds, turbine temperature and air flow will decrease in accordance with the corresponding thrust profile. Similarly, there is a significant increase in rotor speed, temperature and air flow when the power plant undergoes a transition from part power to military power.

With existing jet engine controls there is a "bootstrap" process which occurs when there is a request for more or less power. Known controllers initiate a request for more or less power by increasing or decreasing fuel flow in response to the change in throttle power lever angle (PLA). The change in fuel flow produces changes in power via combustor exit conditions. Only in response to these changes are the engine spool speeds changed and, in turn, is the compression system geometry adjusted, such as the position of the fan variable vanes (FVV), high compressor variable vanes (HCVV) and exhaust jet nozzle area (AJ). In transient power situations the result is lessened engine flexibility and slower engine response. In addition, systems which control the gas path variable engine parameters in response to changes in fuel flow are characterized by non-optimum engine performance, as evidenced by higher fuel consumption and potential compressor system instability.

As is further well known and historically, the control for the gas turbine engine has typically adjusted fuel flow in attempting to optimize operation of the engine. In a typical installation the fuel control monitors a plurality of engine operating parameters and processes these signals to produce outputs that would be indicative of a desired engine operation while assuring that the engine avoids surging, overheating and rich and lean flame out. To achieve this goal the computer portion of the control manifests a control logic that represents the operation of the engine and continuously schedules fuel flow to reflect the setting of the power lever.

In engines, particularly of the military variety, the control also, independently, monitors engine variables to schedule the variable geometry portions of the engine such as inlet guide vanes, exhaust nozzles and the like, to likewise attain optimum operation for any given operation within the engine's operating envelope.

Hence, it is apparent that a change in one control function would affect the condition of others so that there would be constant iterations of each of the controls to assure optimum operation of each. For example, a change in the exhaust nozzle area would typically change the pressure within the engine, which pressure would be monitored by the fuel control, which in turn would manifest a change in the fuel control to ultimately adjust fuel flow to reflect this change. In this process the scheduling of the fuel flow either to increase or decrease fuel will occur even prior to the time it takes the variable geometry of the engine to react. This "bootstrapping" effect has been addressed above and is further described later.

The control intends to avoid the problem of "bootstrapping" attains a faster thrust response and improved surge margin by synchronously scheduling fuel flow and the variable geometries of the engine in response to a single parameter which is a function of certain engine and aircraft operating variables. In order for this type of active geometry control system to be a useful system, it must be able to attain a high degree of repeatability in assuring that for any given setting the control will return to a given steady state operating point in the operating curve after any transition excursion. During a transient excursion, the control logic will assure that the point of operation is identical to the setting of the power lever which request is desired thrust even though the engine operating variable changes as a result of wear and tear of the engine, power extraction or compressor air bleed.

This invention contemplates utilizing a corrected speed (RPM) of the low pressure spool (N₁) of a twin spool engine as the primary control parameter. As is the case in many of the military engines, the low pressure spool is only aerodynamically coupled to the high pressure spool. In order to attain the optimum engine operation from a performance standpoint, the corrected rotor speeds for the high and low pressure spool must be proportional to each other for every given steady-state engine condition.

In fighters and other military aircraft, it is extremely important that a demand by the pilot for a change in thrust produced by the engine be as fast and as accurate as possible. The aircraft's ability to undergo the violent maneuvers anticipated when operating in the combat box, for example, in fighter aircraft, bears directly on the performance of that aircraft. When a demand for a thrust change is initiated, for example, when the pilot exercises a bodie maneuver, i.e., a quick demand for a drop in thrust (decel) followed by an immediate demand for an increase in thrust (accel) or vice versa, the engine should attain the demanded thrust levels by decelerating to the desired thrust level before accelerating to the desired thrust level in the quickest time possible. With heretofore known control logic, maneuvers, such as these bodies as well as chops, are influenced by the constraints owing to the high inertia of the rotating spool. Since a thrust change necessitates a decrease or increase in RPM of the high pressure compressor, this high inertia adversely affects the time responsiveness of the engine.

Needless to say, it is also extremely important that the engine operates as efficiently as possible to achieve good TSFC (thrust specific fuel consumption) and stable engine operating conditions, namely, avoiding surge, engine flame out and overheating.

It has been found that by controlling both the fuel and the fan variable vanes as a function of corrected low pressure compressor speed, both steady state and transient operations are enhanced. In transients, this invention contemplates locking in a fixed corrected low compressor speed (N₁), setting a target for the desired thrust and zeroing in on this target by adjusting the area of the fan variable vanes. This logic allows the high pressure compressor spool to adjust speed to a value corresponding to the targeted thrust (Fn). A proportional plus integral controller assures that the corrected engine airflow (Wa) is properly attained while N₁ is held constant. Once the target is reached, the active low compressor controller (ALCC) automatically trims the low pressure compressor spool speed and hence the low compressor speed and FCVV to return to the operating line at a value that is equivalent to the desired speed ratio of the high and low pressure compressor to assure optimum engine performance.

It has further been found that by controlling both the fuel and high compressor variable vanes as a function of corrected low pressure compressor speed, we can enhance both steady state and transient operations. In transients, this invention contemplates locking in a fixed corrected high compressor speed (N₂), setting a target for the desired thrust and zeroing in on this target by adjusting the angle of the high compressor variable vanes. This logic allows the low pressure compressor spool to adjust speed to a value corresponding to the targeted thrust (Fn). A proportional plus integral controller assures that the N₁ speed is properly attained while N₂ is held constant. Once the target is reached, the active high compressor controller (AHCC) automatically trims the high pressure compressor spool speed and HCVV to return to the operating line at a value that is equivalent to the desired speed ratio of the high and low pressure compressor to assure optimum engine performance.

An object of the present invention is to provide an active geometry control system for gas turbine engines which uses a single parameter to set overall engine thrust as a function of total engine air flow and pressure ratio.

Another object of the present invention is to provide an active geometry control system for gas turbine engines having synchronous scheduling of combustor fuel flow with gas path variable parameters by means of variable compression system geometry parameters.

Another object of the present invention is to provide an active geometry control system that modulates compressor system air flow while minimizing excursions of engine rotor speeds.

A further object of this invention is to provide improved control logic for a two spool fan jet engine powering aircraft having variable area vanes on the fan or on the high spool that assures fast thrust response responsive to power lever input while assuring optimum TSFC when the engine operates in the quiescent state.

According to the invention these objects are achieved by the control systems described in the independent claims. Advantageous embodiment of the invention are described in the dependent claims.

Compared to the prior art the present invention incorporates a different technique for achieving the quick response of the engine and unlike the European Patent Application publication 0 277 904 and US Patent No. 4,242,864, it generates an electronic target signal that is inputed whenever the power lever is changed from one position to another. The target signal is a primary function of the electronic controller and operates constantly unlike the control system in the 4,242,864 patent that only operates when a certain condition exists. The electronic controller assures that the target signal is consistent with the engine's variable operating conditions, such as compressor speed, Mach number, engine inlet temperature, etc. When a change in power lever occurs the target is scheduled and the electronic controller in response to engine operating variables adjusts the variable area exhaust nozzle to attain the desired target and then, adjust fuel flow in order to economize on the fuel. Obviously, the prior art controllers are not concerned with generating a target signal and hence, are essentially different types of controllers.

The foregoing and other features and advantages of the present invention will become more apparent from the following description and accompanying drawings, wherein;
Fig. 1 is a simplified schematic illustration of a gas turbine engine employing an active geometry control system provided according to the present invention.
Fig. 2 is a detailed schematic illustration of a portion of the active geometry control system of Fig. 1.
Fig. 3 is a simplified block diagram of a second portion of the controller of Fig. 1;
Fig. 4 is a simplified block diagram of a third portion of the controller of Fig. 1;
Fig. 5 is a diagrammatic illustration showing the relationship between high compressor vane position angle as a function of a high compressor corrected speed;
Fig. 6 is a diagrammatic illustration showing transient to steady state response of the control system of Fig. 1;
Fig 7. is a diagrammatic illustration relating engine net thrust to exhaust area for selected fan rotor speeds;
Fig 8. is a graphical representation of the low spool operating line plotting the low compressor variable vane (LCVV) to the low pressure compressor speed (N₁) corrected for its inlet conditions illustrating the features of this invention;
Fig. 9 is a schematic and block diagram illustrating the overall relationship of the control to the gas turbine engine and illustrating the control logic of the low compressor variable vanes;
Fig. 10 is a graphical representation of the high spool operating line plotting the high compressor variable vane (HCVV) to the high pressure compressor speed (N₂) corrected for its inlet conditions illustrating the features of this invention; and
Fig. 11 is a schematic and block diagram illustrating the overall relationship of the control to the gas turbine engine illustrating the control logic of the high compressor variable vanes.

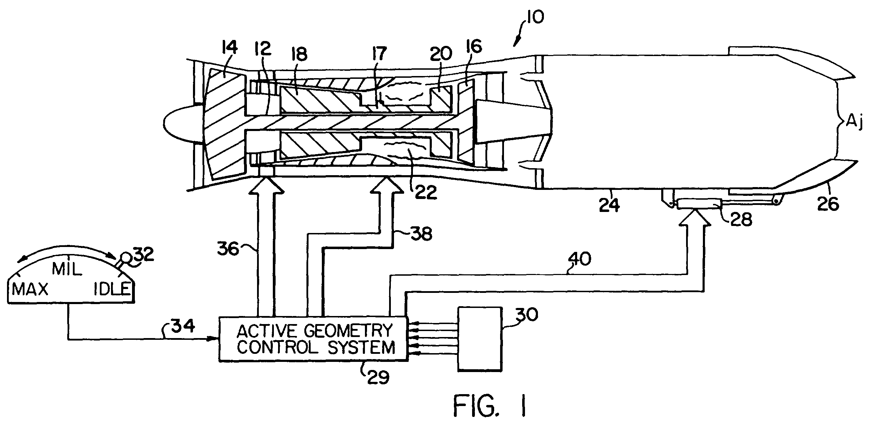

Referring now to Fig. 1 there is illustrated in schematic form a jet engine 10 which is of a conventional twin spool type having an N₁ spool 12 including a fan 14 driven by a low pressure turbine 16 and an N₂ spool 17 having a high pressure compressor 18 and high pressure turbine 20. The high pressure compressor and high pressure turbines are sometimes referred to as the gas generator or engine core. A conventional burner 22, disposed between the compressor exit and turbine inlet serves to heat and accelerate the engine's working medium in order to energize the gas sufficiently to power the turbines and generate thrust. The high pressure spool and low pressure spool are not mechanically connected to each other but rotate independently. The engine also includes an augmentor 24 receiving discharged gas from the low turbine. The gas exits the engine via an exhaust nozzle 26. As is conventional, an actuator 28 is used to control the position of the exhaust nozzle and thereby vary the area (AJ) of the exhaust discharge opening.

Also illustrated in Fig. 1 is an active geometry control system 29, described hereinafter. As is conventional, the control system receives signals from various components and sensors in the engine and aircraft, indicated schematically at 30. Engine parameters are used by the control system to generate command signals to control burner fuel flow and the area of the exhaust nozzle in accordance with predetermined schedules selected to achieve optimum engine operation over the engine's flight envelope. As detailed hereinafter, an active geometry control system provided according to the present invention is characterized by the control of burner fuel flow and exhaust nozzle area which is synchronous with the control of variable gas path parameters.

Both the fan and high compressor have a plurality of vanes whose position are adjustable from closed to fully open. As is well known, these variable vanes can be adjusted according to preprogrammed schedules which will optimize the power and response of the engine. The pilot controls engine power output by varying the position or angle of throttle lever 32. The angle of the throttle lever as well as the rate of change of throttle lever angle is determinative of the amount of power supplied by the engine. Signals indicative thereof are provided on lines 34 to the controller where the power lever angle and the rate of change of power lever angle can be determined. Signals are provided to the jet engine for the system 29 to control engine parameters as illustrated by lines 36,38 and 40.

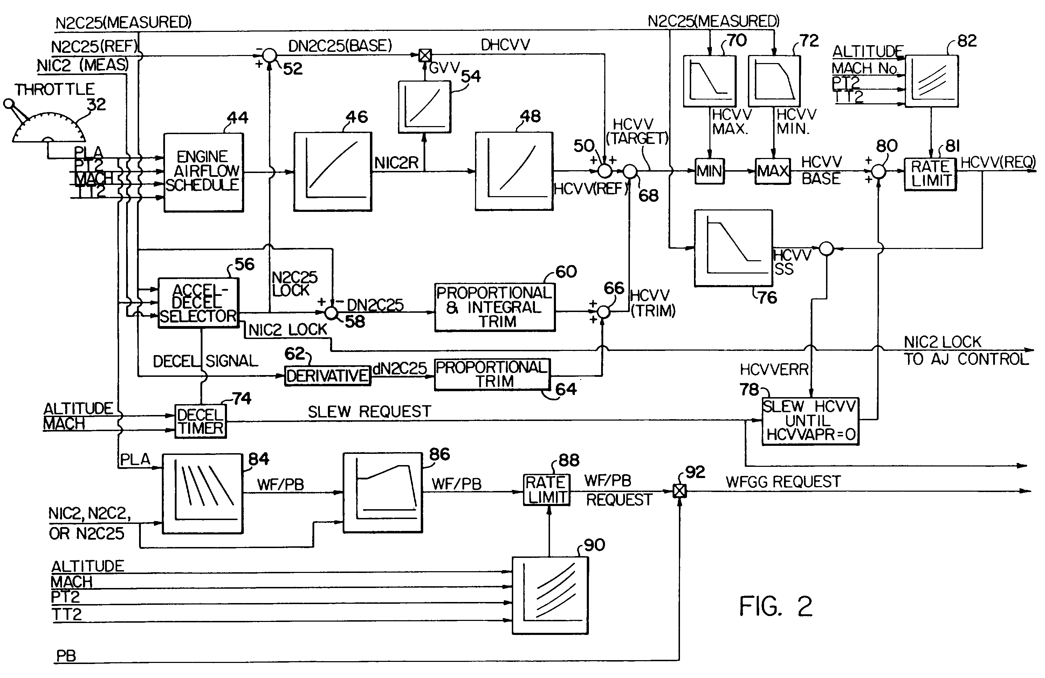

Referring now to Fig. 2, there is a detailed schematic illustration of the active geometry control system of Fig. 1. Modern aircraft employ an electronic engine control which monitors aircraft parameters and which is preprogrammed with a plurality of parameter schedules for selecting fuel flow and other engine parameters in accordance therewith. Although it is preferable to embody the present invention in a digital electronic form, those skilled in the art will note that the present invention can alternately be embodied in analog electronic, hydraulic or mechanical means with appropriate conventional changes in hardware and software.

In the best mode, embodiment of the control system is digital and includes such hardware and software as is needed to accomplish the functions detailed herein. Parameter sensors, digital-to-analog and analog-to-digital converters and conventional computer means which may be required are not illustrated for the sake of clarity. Also in the control system of Fig.2, a plurality of function generators have been diagrammatically shown with unlabeled axes for purposes of clarity. As is conventional, the ordinate parameter for each function generator is labeled after its symbol, while the abscissa parameters precede it. Further, the several parameters illustrated would be recognized by those skilled in the art to correspond to well known parameters which may be corrected (C) for certain standard positions (2,2.5) within the engine. Therefore, N₂C_{2.5} (meas)represent the measured value of N₂ spool speed corrected for position 2.5 in the engine. A glossary of terms is provided below.

### GLOSSARY OF TERMS

- AJ: jet nozzle area
- AJT: transient area adjustment
- PLA: power lever angle
- PT2: signal indicative of engine inlet pressure
- TT2: engine inlet temperature
- EPR: engine pressure ratio
- N₁C₂: fan rotor corrected speed at station 2
- DN₁C₂: differential fan rotor corrected speed(error)
- DAJ_{1,2}: differential exhaust nozzle area
- P_{B}MIN: minimum burner pressure
- PB: burner pressure
- DPB: burner pressure error
- FVV: fan variable vane position
- HCVV: high compressor variable vane position
- N₁C₂R: fan rotor corrected speed request
- HCVVREF: high compressor variable vane position(Ref)
- DHCVV: differential corrected high compressor variable vane position
- HCVVREQ: final requested high compressor variable vane position (Ref)
- DN₂C_{2.5}: differential high compressor corrected speed (error)
- GVV: gain
- dN₂C_{2.5}: derivative corrected high compressor speed
- WFgg: fuel flow request
- WF/PB: fuel flow ratio
- N₁: low compressor rotor speed
- N₂: high compressor rotor speed
- 2: engine inlet station
- 2.5: an discharge station
- 3: compressor discharge station
- N₂C_{2.5}: high compressor speed corrected at station 2.5

As detailed hereinafter, the active geometry control system provided according to the present invention is characterized by independently coordinated use of main combustor fuel flow with selected geometries of variable gas path elements to optimize engine performance. Consequently, thrust response and compression system stability of turbo jet and turbo fan gas turbine engines are improved. As indicated hereinabove, known jet engine control systems would provide fuel to the combustor in response to changes in the power lever or throttle angle initiated by the pilot. The increased fuel would produce changes in the engine dynamics, requiring changes in fan or low compressor variable vane position and high compressor variable vane position in addition to the jet nozzle area. The process of increasing (or decreasing) fuel flow before rotor speeds and hence, any gas path elements can sufficiently react is known to those skilled in the art as "boot strapping". This process limits the rate at which power transients can be produced by the jet engine.

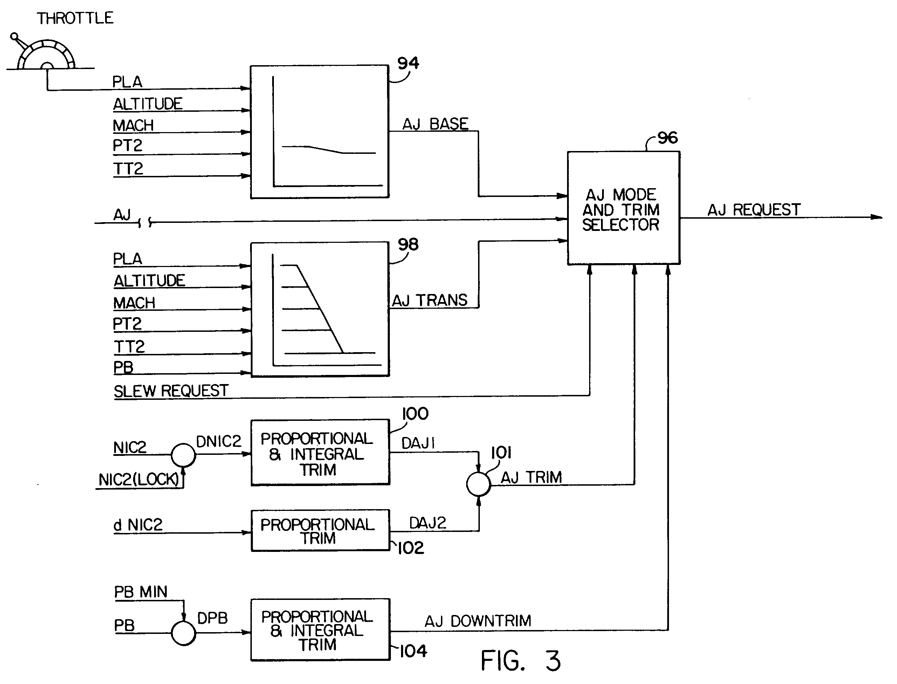

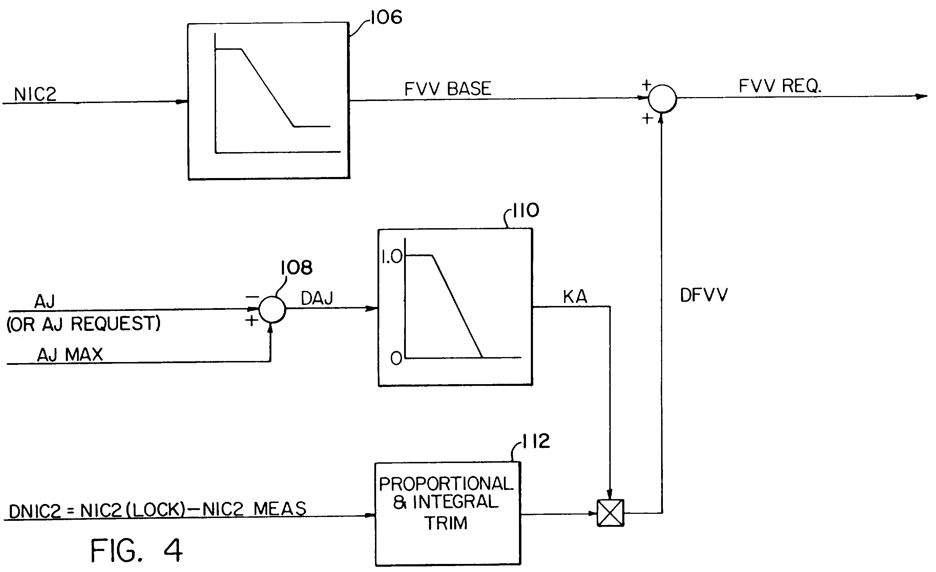

However, with the active geometry control system provided according to the present invention, fan and high compressor variable vane position, jet nozzle area and fuel flow are all synchronously controlled in response to a power request. The system anticipates the response of the engine such that either or both compression system air flows are modulated with reduced excursion of spool speeds. Fig. 2 illustrates the portion of the control system which generates control signals for both the actuators which control the high compressor variable vane position and the fuel flow in the combustor. Fig. 3 is seen to detail that portion of the control system which generates signals for adjusting the area of the exhaust gas nozzle. Fig. 4 schematically details that portion of the control system which generates fan variable vane position control signals.

In order to adjust the high compressor variable vane position, the control system must compute an engine air flow parameter value as well as determine whether the engine is accelerating or decelerating, and the magnitude thereof. Throttle or power lever 32 is the principal mechanism by which the aircraft pilot requests changes in engine power. Signals indicative of the power lever angle (PLA) are provided to engine airflow schedule mechanism 44 which also receives a plurality of signals from the aircraft, including engine inlet pressure (PT2), airplane speed (Mach number) and engine inlet temperature (TT2). The scheduled value of engine airflow is received by function generator 46, which requests a corrected value of the N₁ spool speed (N₁C₂R).

Function generator 48 outputs a requested value of high compression variable vane position (HCVV(Ref )). The reference values (HCVV(Ref)) is summed at junction 50 with a differential value thereof (DHCVV) comprised of a corrected high compressor speed sensor (DN₂C_{2.5}(base)) generated at junction 52 from a reference value of corrected N₂ spool speed (N₂C_{2.5}(ref)) and a value of N₂C_{2.5} measured just as the new power level was requested (N₂C_{2.5}(lock)). This corrected high compressor speed sensor value is converted by a gain variable vane (GVV) generator 54 as a function of N₁C₂R.

Acceleration/Decelaration selector 56 receives signals indicative of the power lever angle as well as the measured value of the corrected N₂ spool speed, and generates therefrom values of the N₁ and N₂ corrected spool speeds at the initiation of the power request (N₂C_{2.5} lock and N₁C₂ lock). The lock value of N₂C_{2.5} is summed at junction 58 with the measured, corrected N₂ spool speed to produce a differential N₂C_{2.5} value (DN₂C_{2.5}). This signal is provided to proportional and integral trim circuitry 60 which generates a correction signal for HCVV in a conventional manner. Also included is circuitry for detecting very rapid changes in the measured corrected N₂ spool speed. Derivative circuitry 62 receives the measured corrected N₂ spool speed and outputs a derivative value (dN₂C_{2.5}) which is provided to proportional trim circuitry 64 whose output signal of HCVV is configured in conventional, proportional control manner. The output signals of both the proportional trim circuitry 64 and proportional and integral trim circuitry 60 are provided to junction 66, where the signals are summed producing a trim or correction signal for the high compressor variable vane position (HCVV(Trim)). This signal is provided to junction 68 where it is summed with (HCVV ref) signal producing a target value of the high compressor variable vane position (HCVV (target)).

The control system provided according to the present invention compares the target value of the high compressor variable vane position with minimum and maximum allowable values determined by function generators 70 and 72. The value of the target high compressor variable vane position signal is adjusted accordingly if the target value exceeds the upper or lower bounds. This is the adjusted or base value of the high compressor variable vane position signal (HCVV) base.

The control system of Fig. 1 is also characterized by slew request circuitry, including a deceleration timer 74, which receives signals indicative of the airplane's altitude and speed(Mach number) as well as an enable signal from Accel/Decel selector circuitry 56 that indicates the elapsed time from the initiation of the power lever command signal. As detailed hereinafter, the control system of Fig. 1 will automatically reconfigure the engine parameters to be in a steady state mode if the deceleration timer circuitry determines that the power level angle has not changed in a preset period (e.g. 20 seconds).

Function generator 76 receives the N₂C_{2.5}(meas) signal and provides a signal corresponding to the high compressor variable vane position at steady state (HCVVSS). This signal is summed with a high compressor variable vane position request signal (HCVV(req)) to generate a high compressor variable vane error signal (HCVV(err)). In response to a slew request signal, slew error circuitry 78 provides the HCVVERR signal to junction 80 where it is summed with the HCVV(base) signal. As detailed hereafter, the slew request circuitry modifies the HCVV(req) signal in dependence on the time elapsed from the initiation of a change in power level angle signal. If the throttle has been moved within a selected time period (e.g. 20 seconds) the engine is considered in a transient condition and the HCVV(base) signal is adjusted accordingly. At the termination of the time period the HCVV(req) signal is modified by slew error circuitry 78 to slew the high compressor variable vane position back to the scheduled steady state position provided by function generator 76 and thereby reduce N₂ rotor speed. Rate limit circuitry 81 receives the corrected HCVV(base) signal and compares the rate of change of that signal to preselected rate limits scheduled by function generator 82 from the plane's altitude, speed, engine inlet temperature and fan pressure ratio. The controller outputs a HCVV request signal to the high compressor vane actuators.

A measured corrected value of the N₁ or N₂ spool speed is received by fuel flow circuitry 84,86 or, which, in conjunction with the magnitude of the power lever angle, schedules fuel flow-to-burner pressure ratio signal. Rate limiting circuitry 88 limits the fuel flow-to-burner pressure ratio request signal in accordance with function generator 90. The parameters used by the rate limit circuitry 88 are similar to those used by rate limit circuitry 82 in determining the limit of the high compressor variable vane request signal. A signal indicative of burner pressure is provided to junction 92 along with the fuel flow to burner mechanisms in the combustor (22, Fig. 1).

Referring now to Fig. 3, the control system of Fig. 1 includes circuitry for selecting the area of the exhaust jet nozzle. For nonafterburner operation, function generator 94 schedules a base value (AJ base) of the exhaust jet area as a function of power lever angle the airplane's altitude, speed, the engine inlet temperature and pressure. This signal is provided to a jet area mode and trim selector circuitry 96 which provides the AJ base in dependence on the engine transient or steady state node. Circuitry 96 receives signals indicative of the steady state value of the nozzle area. A transient nozzle area adjustment signal (AJ(trans)) is scheduled by function generator 98 as a function of a core engine parameter, such as P_{b}/P₂ as well as some of the same parameters as used for the AJ(base) signal. The AJ(trans) singal is primarily responsible for holding the N₁C₂ signal to a high value during deceleration for specified time as set by timer circuitry 74 in Fig.2. The requested exhaust nozzle area is further modified at circuitry 96 by proportional and integral trim circuitry 100 and proportional trim circuitry 102. The N₁C₂(lock) signal set by the accelerator/decelerator selector circuitry 56 in Fig. 2 is compared to the N₁C₂(meas), generating a DN₁C₂ signal from which the proportional and integral trim circuitry 100 generates a differential exhaust nozzle area signal, DAJ₁. The proportional trim circuitry 102 provides a second differential exhaust nozzle area signal (DAJ₂) that is a function of a derivative of the N₁C₂ meas signal, dN₁C₂. Both DAJ₁ and DAJ₂ signals are summed at junction 101(AJ trim) and provided to AJ mode and trim selector circuitry 96. The AJ(trim) and AJ(trans)signal values ultimately adjust the N₁C₂ signal value to the value of N₁C₂ (lock).

In the event a minimum gas generator supply pressure, such as burner pressure (PB), is required for aircraft bleed, a second proportional and integral trim circuitry 104 is provided in the event that the burner pressure minimum cannot be supplied with an open nozzle at the operating value of N₁C₂. A differential burner pressure signal (DPB) is generated by comparing the minimum burner pressure value with the engines value. This signal is received by circuitry 104 and generates an exhaust area downtrim signal which revises the fan discharge pressure by closing the exhaust nozzle, which generates a corresponding rise in the burner pressure to the minimum required value. After a selected time(e.g. 20 seconds) the slew request circuitry configures all transient exhaust area trim signals to zero the provide optimum steady state performance. In the event that the lock value of N₁ spool speed (N₁C₂(lock)) is unattainable with an open exhaust nozzle, the system of Fig. 1 comprises a circuitry to close the fan variable vanes (FVV) to increase N₁ spool speed.

Fig. 4 is a simplified block diagram of that portion of the control system of Fig. 1 which generates a fan variable vane position request signal for the fan vane actuators. The function generator 106 receives signals indicative of the corrected measured N₁ spool speed (N₁ C₂) and schedules therefrom a base value of the fan variable vane position signal. Signals indicative of the exhaust nozzle area as well as the maximum allowed exhaust nozzle area are received at junction 108. Function generator 110 outputs a trim authority index which is slewed from a value of zero to one, the zero value corresponding to zero FVV position trim. The circuitry insures that both the exhaust area and fan variable position trims will not be fully active at the same time to avoid possible unstable interactions. A differential value of the corrected measured N₁ spool speed DN₁C₂ that generated from the difference between the N₁C₂ lock signal value and the measured corrected N₁ spool speed (N₁C₂(meas)) is provided to a proportional and integral trim circuitry 112 which, when summed with the trim authority index signal and the fan variable vane base signal, comprises the fan variable vane position request signal.

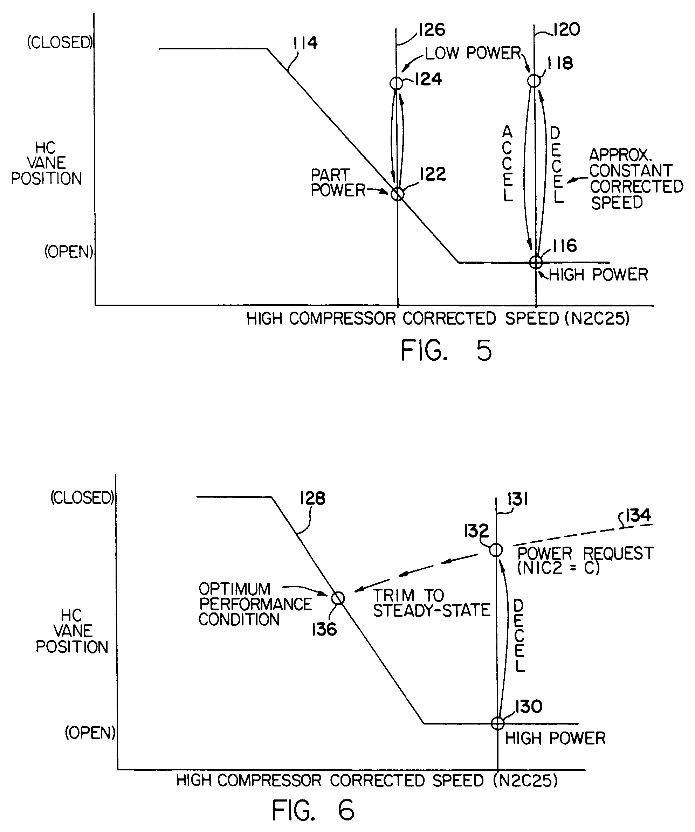

The system is configured such that as the exhaust nozzle is slewed to the steady state position or as the exhaust nozzle closes during a reacceleration, the differential fan variable vane position signal value (FVV) is automatically trimmed to zero since the trim authority value is slewed to zero as well. The synchronization of nozzle area together with fuel flow, fan variable vane position and high compressor variable vane position accomplished through the use of throttle input provides a unique method of controlling both fan and high compressor operating lines, and marks a point of departure of the present invention from the prior art. Extremely fast engine thrust transients are possible since fan or low compressor rotor speed is held high. The system described herein allows total engine power to be controlled by air flow via compression system geometry and by fuel flow. The improved thrust response and compression system stability of of turbo jet engines and turbo fan gas turbine engines that is provided by the present invention can be seen by reference to Fig. 5.

Fig. 5 is a diagrammatic illustration showing the steady state relationship between high compressor variable vane position (HCVV) and high compressor corrected speed (N₂C_{2.5}) detailed by curve 114. If the engine is operating at high power (Point 116) and receives a command to decelerate to a low power (Point 118) the system provided according to the present invention configures the engine so that the high compressor corrected speed essentially remains constant. Subsequent power request to accelerate or decelerate correspond to excursions along line 120. Consequently, rapid thrust response can be obtained from the engine without waiting for the speed of the high compressor fan to increase or decrease. This instantaneous response can also be obtained at other power levels, as indicated by points 122 and 124 which form an excursion line 126.

The system provided according to the present invention is also capable of monitoring the engine operating condition. If the engine is in a transient condition, i.e. the time elapsed from the previous power request is less than a preselected value, the system provides the optimum combination of transient rate and compression system aerodynamic stability. If, on the other hand, the engine is in a steady state condition, the system provides the optimum combination of engine performance such as specific fuel consumption and compression system aerodynamic stability by automatically trimming from the transient mode high compressor variable vane position to the steady state high compressor variable vane position, as illustrated in Fig.6.

Curve 128 illustrates the relationship between high compressor variable vane position(HCVV) and high compressor corrected speed (N₂C_{2.5}) in a manner similar to that of Fig. 5. For example, if the engine is operating at high power (Point 130) and receives a command to decelerate the system locks the value of high compressor corrected speed(N₂C_{2.5} lock) and adjusts the variable vane position to arrive along excursion line 131 at temporary set point 132. The temporary set point is also on curve 134 which corresponds to an operating line of constant power request (N₁C₂=constant). If the subsequent power request has not been recieved within the selcted time period, the system trims the high compressor corrected speed and high compressor variable vane position to a value thereof corresponding to optimum engine performance (Point 136).

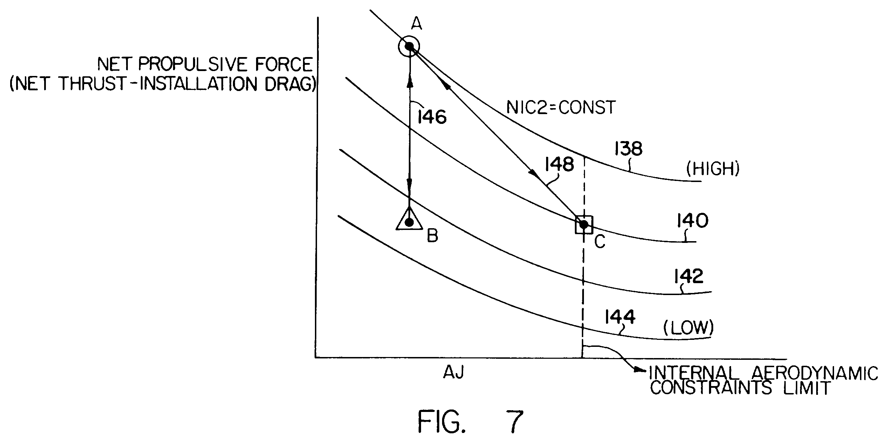

An advantage of synchronous exhaust area scheduling provided according to the present invention compared with prior art control systems is depicted in Fig. 7. Curves 138, 140,142 and 144 show net propulsive force as a function of exhaust area (AJ) with fan rotor corrected speed N₁C₂ at corresponding constant rotor speed values. With existing control systems, a deceleration from intermediate thrust (to low thrust(curve 146)) with little or no increase in exhaust area(AJ) results in a large reduction in low rotor (N₁) speed. Throttle response is adversely effected since the N₁ rotor speed must substantially increase in order for engine thrust to subsequently return to intermediate thrust(A). The large rotor speed excursion reduces the rotor low cycle fatigue(LCF) life drastically. Also, the smaller low power exhaust area reduces low speed compressor stability.

In contrast, an active geometry control system of the present invention schedules the exhaust area to open synchronously with other engine parameters. As indicated by curve 148, identical levels of low thrust can be obtained at higher low rotor (N₁) speeds(C). With a control system of the present invention rotor speeds at low thrust are higher than are obtained with axisting control systems since thrust level is not only dependent upon a reduction in rotor speed but rather is significantly effected by the larger exhaust area. Therfore an active geometry control system of the present invention provides dramatic improvement in thrust response because the engine spool speeds do not have to change significantly. The reduced rotor speed excursions correspondingly increase rotor low cycle fatigue(LCF) life. Moreover, the larger exhaust area at low thrust levels enhances compression systems stability. The larger exhaust area (AJ) reduces back pressure on the low pressure compressor by means of a bypass duct. Since the low pressure turbine is "un-choked" at low power, the corresponding reduction in nozzle pressure lowers the high pressure compressor operating line and hence enhances high compressor stability.

The active geometry control system provided by the present invention utilizes the concept of sychronous scheduling of all as path variable parameters and gas generator (main engine combustor) fuel flow parameter. The synchronization of the fuel flow rate limit during acceleration and the HCVV/(reg) rate limit provides unique control and adjustment capability of high compressor operating line. If the engine reacceleration command is performed before the expiration of the period set by the deceleration timer and the control system has not permitted scheduing of steady state high compressor variable vane position extremely fast thrust accelerations are possible since power is not dependent upon significant rotor speed acceleration.

As mentioned above this invention is particularly efficacious for military aircraft powered by a twin spool, axial flow fan jet. A typical installation where this invention would be applicable is for the F-100 family of engines manufactured by Pratt & Whitney Aircraft, a division of United Technologies Corporation, the assignee of this patent application, and reference should be made thereto for further details.

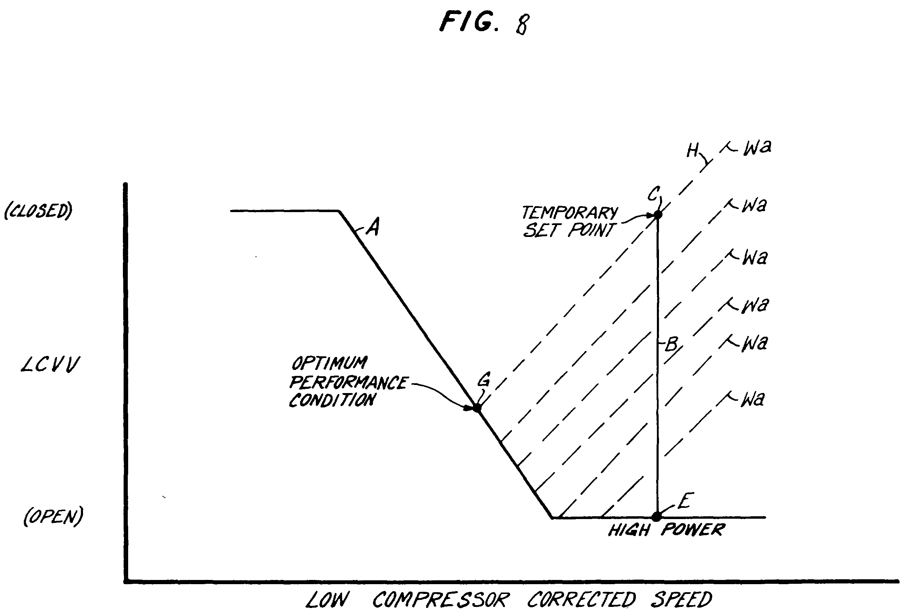

To fully appreciate the objectives of this invention reference should be made to FIG 8 which shows a typical operating line of the LCVV plotted against N₁(unless otherwise specified all speed parameters are intended to be their corrected value). Since the fan and low pressure compressor are a unitary rotor and connected by the same shaft, the fan and low compressor speed are obviously identical. Curve A illustrates the usual operating line of the low speed compressor and, as noted, Fn or Wa increases as N₁ increases. Wa is corrected airflow parameter normalized as a function of total inlet temperature and pressure. In this particular plot showing the relationship of the LCVV, the vanes open at the high power conditions, close at low power condition and are modulated therebetween.

The operating line (Curve A) is manifested by the coordinated efforts of controlling fuel and the vanes which is typically controlled as a function of engine and aircraft operating variables. According to this invention rapid transients can be produced by controlling the LCVV such that low compressor airflow is modulated at constant or nearly constant N₁. Curve B is illustrative of a trnasient deceleration to a lower power thrust value identified as point C on Curve B. As is apparent fromthe graph, the active low compressor control (ALCC) serves to hold N₁ constant (Curve B) while modulating the LCVV until the engine attains the tar get (point C). If a bodie is exercised, the engine is accelerated back to the high power condition (point E) by again merely adjusting LCVV and controlling along curve B.

If the bodie maneuver in the above example is not exercised, N₁ would remain fixed at point C. In accordance with this invention, after a given interim the ALCC trims the LCVV and fuel flow to return the setting to the operating line (Curve A) to the steady state operating point illustrated by point G along the constant Wa line (Curve H in this example). This is the condition of optimum engine performance from a TSFC and stability standpoint.

While the example above describes a transient excursion at a selected N₁ speed setting, these excursions will occur at any point along the operating line.

In its preferred embodiment the fuel control and ALCC are the electronic, digital type of controller and the fuel control may be, for example, the fuel control Model #EEC-104 manufactured by the Hamilton Standard division of United Technologies Corporation (incorporated herein by reference) or may be implemented by other mediums, such as, hydro-mechanical, electro-mechanical, and the like. As will be best understood by those skilled in the art, once the function's logic is understood, state-of-the-art, technology can be implemented to execute this invention.

As is apparent from the foregoing, the control will operate to attain tha gas generator (N₂) operating line by normal adjustment by the fuel control by the flow of fuel to the engine's combustor. Normal transients are likewise manifested in this manner. For rapid transient excursions, such as those contemplated when operating in the combat box, the control will automatically control the engine's acceleration and deceleration modes as a unction of the primary control parameter N₁. N₁, therefore, is scheduled as a function of a power lever angle α which automatically sets engine thrust by proper scheduling of total engine airflow and engine pressure ratio by virtue of adjusting the LCVV. Thus, in this instance, N₁ is utilized as the primary control parameter for scheduling both fuel flow and LCVV.

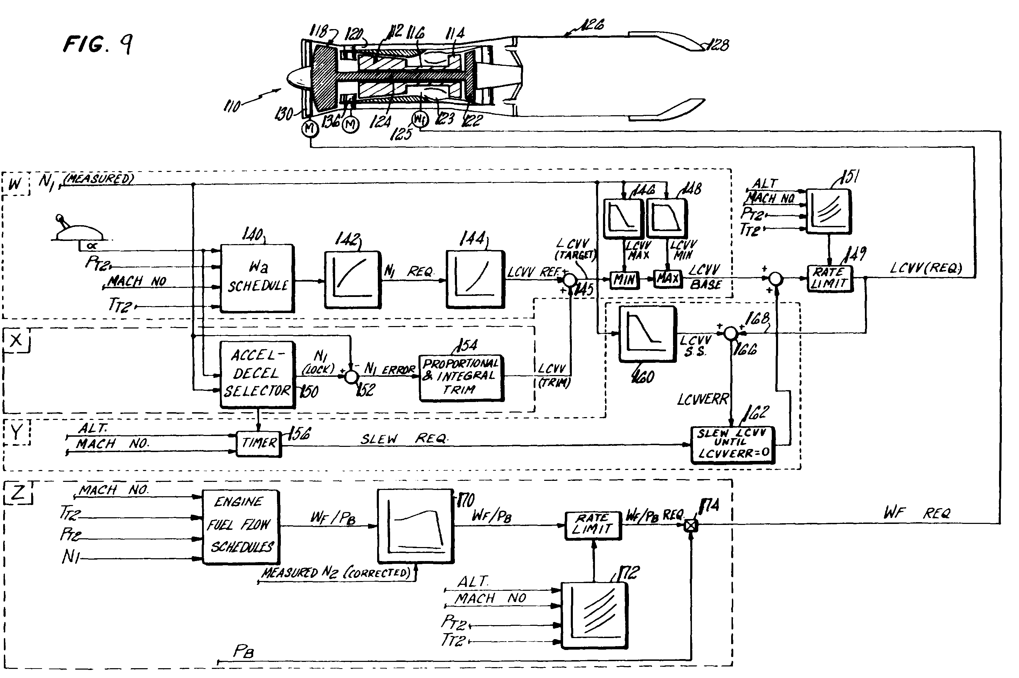

The type of engine for which this invention is particularly efficacious is schematically illustrated in FIG 9 as being a fan jet engine generally illustrated by reference numeral 110 and comprised of an axial flow twin spool configuration. As schematically shown, the high pressure spool consists of a plurality of stages of compressors generally illustrated by reference numeral 112 driven by the first stage turbine 114 and interconnected thereto by shaft 116.

The low pressure spool consists of the fan/low pressure compressor combination generally illustrated by reference numeral 118 where the fan portion discharges through the outer annular passageway 120 and the low pressure compressor discharges into the inlet of the high pressure compressor. Low pressure turbine stages 122 serve to power the fan/low pressure compressor 118 which is connected thereto by shaft 124. A suitable combustor 123 is interposed between the compressor section and turbine section where fuel is combusted to provide the working medium for powering the turbines and generating thrust. Fuel is fed to the combustor by throttle valve 125 as will be described hereinbelow.

The engine may utilize a suitable augmentor generally indicated by reference numeral 126 and a suitable variable jet nozzle 128. The engine has variable vanes 130 at the inlet of the fan and may also include variable vanes 136 in the high pressure compressor section.

As an understanding of the details of the engine are not necessary for an understanding of this invention, for the sake of cenvenience and simplicity, they are omitted herefrom. It is, however, necessary to understand that the invention is applicable in a single or multiple spool engine that has variable vanes at the inlet of the fan and/or low pressure compressor.

The electronic digital controller is comprised of four distinct circuits, W, X, and Z. While each of these circuits respond to a plurality of measured variables, these signals are interconnected to each of the circuits so that these signals are shared as needed.

Circuit W serves to derive a target thrust signal in accordance with the input of the power lever by scheduling engine airflow as a function, of power lever position (α), fan inlet pressure and temperature and aircraft Mach No. The output of the function generator 140 becomes the input to function generator 142 for setting a N₁ request signal. This N₁ request signal as applied to function generator 144 which becomes the control parameter for scheduling a reference LCVV position (LCVV ref). The LCVV ref signal and the LCVV trim signals are applied to summer 145 and this value is the target value of the LCVV. The LCVV target value is restricted by a minimum and maximum limiter by the function generators 146 and 148 respectively as a function of actual N₁ corrected to inlet conditions. The output of summer 145 which the LCVV target sets is the LCVV request signal (LCVV req). As shown in block 149 in the block diagram, the LCVV req signal may be rate limited by function generator 151 as a function of altitude, Mach No., P_{T2} and/or T_{T2}. It is apparent from the foregoing that in the example in FIG 8, the target signal C which is the output of the summer 145 is attained by adjusting LCVV to attain the proper Wa value while maintaining N₁ constant (scheduling along Curve B).

In circuit X, the accel/decel selector logic 150 locks a value of N₁ as a function of the motion of the power lever and is compared to the measured value of N₁ by summer 152 to provide an N₁ error signal. This difference is the input for a proportional-plus-integral controller 154 which is applied to summer 145 to trim LCVV to adjust N₁ to the N₁ lock value (Curve B of FIG 8).

The decel timer 156 in circuit Y is activated by the decel signal from the accel/decel selector 150. Values of the timer 156 are set as a function of altitude and Mach No. At the termination of the signal produced by timer 156, the LCVV's are slewed from their temporary position to the steady state schedule (LCVVSS), scheduled by function generator 160 as a function of actual N₁ via the elimination of LCVVERR, a function of timer 156 setting the LCVV(req) and LCVVSS. The summer 166 schedules the LCVV steady state signal as a function of the LCVV vane position via feedback line 168. This function reduces N₁ to the normal steady state operating speed(point G in the example in FIG 8).

Fuel flow is regulated by circuit Z which schedules fuel flow by generating a W_{f}/P_{B} signal as a function of the N₁ request signal generated by the function generator 142 in the W circuit (where W_{f} is fuel flow in pounds per hour and P_{B} is the high compressor discharge pressure or the pressure of the engine's combustor.

The function generator 170 serves to limit the W_{f}/P_{B} maximum and minimum values as a function of measured N₂ corrected to the inlet value. The W_{f}/P_{B} may be rate limited as shown by the function generator 172 as a function of any number of engine and/or aircraft operating variables, such as, Alt., Mach No.,P_{T2} and T_{T2}. The W_{f}/P_{B} request value is then multiplied by a suitable multiplier 174 by the measured P_{B} value to produce a fuel flow (W_{f}) signal for driving the throttle valve 125 and regulating fuel flow to the engine's combustor.

The synchronization of the fuel flow rate of change and the LCVV(req) rate of change provide unique control and adjustment capability of the low pressure compressor operating line, especially during engine thrust decels. If the engine has been previously at high power and a thrust re-accel performed before the decel timer permits scheduling of LCVVSS, extremely fast thrust accelerations are possible since power is not dependent on low rotor speed re-acceleration.

As mentioned above this invention is particularly efficacious for military aircraft powered by a twin spool, axial flow gas turbine engine either of the fan or straight jet variety. A typical installation where this invention would be applicable is for the F-100 family of engines manufactured by Pratt & Whitney Aircraft, a division of United Technologies Corporation, the assignee of this patent application, and reference should be made thereto for further details.

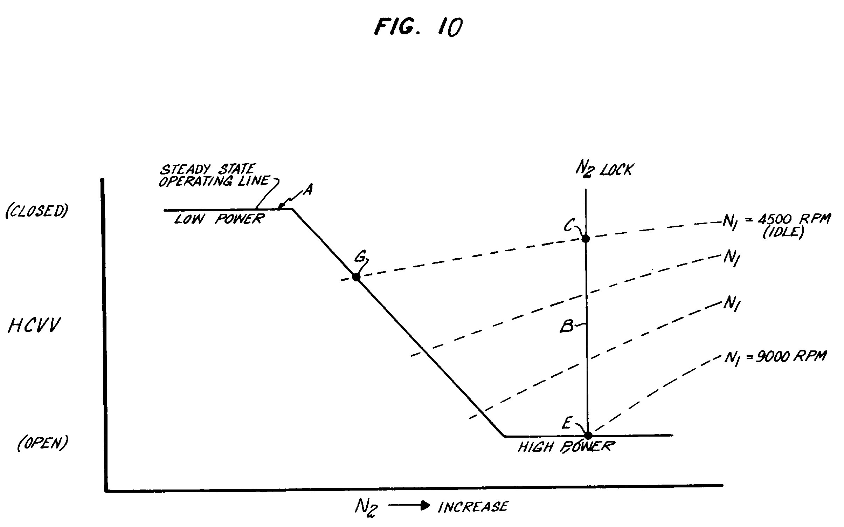

To fully appreciate the objectives of this invention reference should be made to FIG 10 which shows a typical operating line of the gas generator, i.e., HCVV plotted against N₂ (unless otherwise specified all speed parameters are intended to be their corrected value). Curve A illustrates the usual operating line of the gas generator and, as noted, power or Fn increases as N₂ increases. In this particular plot showing the relationship of the HCVV, the vanes open at the high power conditions, close at low power condition and are modulated therebetween.

The operating line (Curve A) is manifested by the coordinated efforts of controlling fuel and the vanes which is typically controlled as a function of engine and aircraft operating variables. According to this invention rapid transients can be produced by controlling the HCVV such that the high compressor airflow is modulated at constant or nearly constant N₂. Curve B is illustrative of a transient deceleration to a lower power thrust value identified as point C on curver B. As is apparent from the graph, the active high compressor control (AHCC) serves to hold N₂ constant (curve B) while modulating the HCVV until the engine attains the target (point C). If a bodie is exercised, the engine is accelerated back to the high power condition (point E) by again merely adjusting HCVV and controlling along curve B.

If the bodie maneuver in the above example is not exercised, N₂ would remain fixed at point C. In accordance with this invention, after a given interim the AHCC trims the HCVV and fuel flow to return the setting to the operating line (curve A) to the steady state operating point illustrated by point G along the N₁ line, N₁=4500RPM in this example. This is the condition of optimum engine performance from a TSFC and stability standpoint.

While the example above describes a transient excursion at a selected N₂ speed setting, these excursions will occur at any point along the operating line.

In its preferred embodiment the fuel control and AHCC are the electronic, digital type of controller and the fuel control may be, for example, the fuel control Model #EEC-106 manufactured by the Hamilton Standard division of United Technologies Corporation(incorporated herein by reference) or may be implemented by other mediums, such as, hydro-mechanical, and the like. As will be best understood by those skilled in the art, once the function's logic is understood, state-of-the-art technology can be implemented to execute this invention.

As is apparent from the foregoing, the control will operate to attain the gas generator (N₂) operating line by normal adjustment by the fuel control by the flow of fuel to the engine's combustor. Normal transients are likewise manifested in this manner. For rapid transient excursions, such as those contemplated when operating in the combat box, the control will automatically control the engine's acceleration and deceleration modes as a function of the primary control parameter N₁. N₁, therefore, is scheduled as a function of power lever angle α which automatically sets engine thrust by proper scheduling of total engine airflow and engine pressure ratio by virtue of adjusting the HCVV and fuel flow. Thus, in this instance, N₁ is utilized as the primary control parameter for scheduling both fuel flow and HCVV.

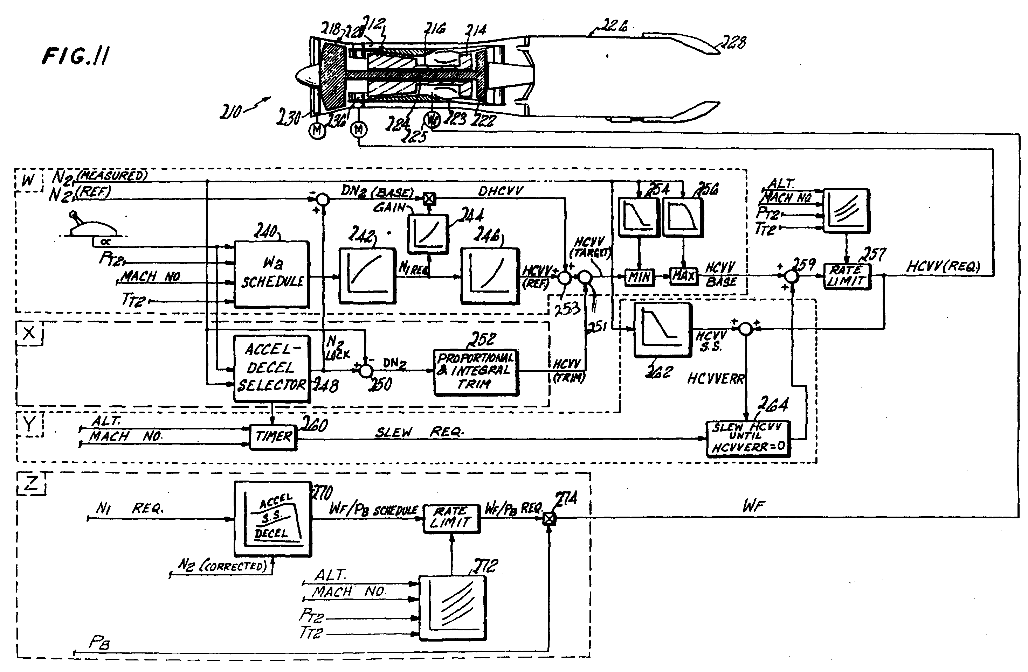

The type of engine for which this invention is particularly efficacious is schematically illustrated in FIG 11 as being a fan jet engine generally illustrated by reference numeral 210 and comprised of an axial flow twin spool configuration. As schematically shown, the high pressure spool consists of a plurality of stages of compression generally illustrated by reference numeral 212 driven by the first stage turbine 214 and interconnected thereto by shaft 216.

The low pressure spool consists of the fan/low pressure compressor combination generally illustrated by reference numeral 218 where the fan portion discharges through the outer annular passageway 220 and the low pressure compressor discharges into the inlet of the high pressure compressor. Low pressure turbine stages 222 serve to power the fan/ low pressure compressor 218 which is connected thereto by shaft 224. A suitable combustor 223 is interposed between the compressor section and turbine section where fuel is combusted to provide the working medium for powering the turbines and generating thrust. Fuel is fed to the combustor by throttle valve 225 as will be described hereinbelow.

The engine may utilize a suitable augmentor generally indicated by reference numeral 226 and a suitable variable jet nozzle 228. The engine may also be equipped with variable vanes 230 and 236 at inlets of the fan and the high pressure compressor respectively.

As an understanding of the details of the engine are not necessary for an understanding of this invention, for the sake of convenience and simplicity, they are omitted herefrom. It is, however, necessary to understand that the invention is solely applicable in a single or multiple twin spool engine that has variable vanes at the inlet and/or other stages of the high pressure compressor.

The electronic digital controller is comprised of four distinct circuits, W, X, Y and Z. While each of these circuits respond to a plurality of measured variables, these signals are interconnected to each of the circuits so that these signals are shared as needed.

In circuit W engine airflow is scheduled as a function of power lever position α, fan inlet pressure and temperature and aircraft Mach No. The output of the function generator 240 becomes the input to function generator 242 for setting a N₁ request signal. This N₁ request signal becomes the control parameter for scheduling both a reference HCVV position(HCVVREF) and a HCVV error signal(DHCVV). The DHCVV signal is derived by applying a gain (slope of the N₁ line of FIG 10) via gain controller 252 and a N₂ speed error signal (DN₂BASE) which is generated as an error signal between a referenced N₂ preselected value(N₂Ref) and a locked N₂ value (curve B in the example of FIG 10) set by the accel/ decel selector 248 in circuit X of the AHCC. The N₂ lock assures that the power lever position will consistently attain a given thrust for each power lever angle and won't be adversely affected by power extraction or changes in the engine's performance due to wear and tear. As noted, the N₂ lock is a mixture of the power lever angle signal and actual N₂.

The targeted value, i.e., the desired thrust corresponding to the position of the power lever, is a sum of DHCVV, HCVVREF and HCVV trim. The HCVV trim signal is a speed error signal (DN₂) from the summer 250 that adds the N₂ locked value and the actual N₂. The DN₂ signal is fed to a proportional and integral controller 252 that trims the N₂ speed signal to assure it maintains a constant or substantially constant value when the engine decelerates to the targeted value (curve B of example in FIG 10). The DHCVV signal and the HCVV signal are summed in summer 253 and produce the summation signal DHCVV. The DHVCC signal and the HCVV trim signal are added in summer 251 which, in turn, produces the HCVV target signal that is indicative of the summation of DHCVV, HCVVREF AND HCVV trim. The target signal is further process to ultimately generate the HCVV request signal that adjusts the actuator of the high pressure compressor vanes 236, as is described in further detail hereinbelow --.

A maximum and minimum HCVV value set by function generators 254 and 256 limits the HCVV base signal as a function of measured N₂. The limits regulate the opening and closing of vanes of the HCVV to stay within prescribed boundaries of the N₂ compressor map. If necessary and to assure that the vanes do not open or close too quickly, a rate limiter 257 which may be adjusted as a function of any number of engine and/or aircraft operating parameters such as altitude, Mach No., P_{T2} and T_{T2} applied to the output of summer 259.

Circuit Y of the controller serves to return the engine to its operating line (curve A of FIG 10)after a predetermined time after the target value has been reached. The time set in a timer 260 may be preselected as a function of altitude and/or aircraft Mach No. At the termination of the timer, the HCVV are slewed from their temporary positions to the steady state schedule(HCVVSS) which is established by the function generator 262 as a function of measured N₂. The controller 264 is a function of HCVVSS, a feedback signal of the position of HCVV and the slew request signal (the output of timer 260). As HCVV and Wf are trimmed, the N₂ value is returned to the steady state operating line(point G in the example shown in FIG 10).

Fuel flow is regulated by circuit Z which schedules fuel flow by generating a W_{f}/P_{B} signal as a function of the N₁ request signal generated by the function generator 242 in the W circuit (where W_{f} is fuel flow in pounds per hour and P_{B} is the high compressor discharge pressure or the pressure of the engine's combustor.

The function generator 270 serves to schedule the W_{f}/ P_{B} value as a function of measured N₂. The W_{f}/P_{B} may be rate limited as shown by the function generator 272 as a function of any number of engine and/or aircraft operating variables, such as, Alt., Mach No., P_{T2} and T_{T2}. The W_{f}/P_{B} request value is then multiplied by a suitable multiplier 274 by the measured P_{B} value to produce a fuel flow (W_{f}) signal for driving the throttle valve 225 and regulating fuel flow to the engine's combustor.

The synchronization of the fuel flow rate of change and the HCVV(req) rate of the change provide unique control and adjustment capability of the high compressor operating line, especially during engine thrust accels. If the engine has been previously at high power and a thrust re-accel performed before the decel timer permits scheduling of HCVVSS, extremely fast thrust accelerations are possible since power is not dependent on significant high rotor speed reacceleration, if any.

## Claims

1. A control system for controlling a gas turbine engine (110) for powering aircraft having a pair of spools comprising a high pressure turbine (114) attached to a high pressure compressor (112) and a low pressure turbine (122) attached to a low pressure compressor or fan (118), each of the pair of spools being aerodynamically coupled to each other, a burner (123) for combusting air and fuel for powering said high pressure turbine (114) and said low pressure turbine (122), and variable area vanes (130) for metering the air flow to said fan or low pressure compressor, said control system comprising fuel regulating means (125) for metering the flow of fuel to said burner, and an engine control responsive to engine operating parameters including low pressure compressor speed (N₁) for controlling said fuel regulating means (125) and said variable area vanes (130) to operate said engine (110) during steady state engine operations on a steady state operating line (A), characterized by an active low compressor controller (ALCC) (W,X) responsive to a power lever setting (α) and N₁ for selecting and obtaining a desired thrust during engine transient conditions, said active low compressor controller (ALCC) including function generator means (140,142,144) responsive to power lever settings (α) and other engine operating parameters for producing a desired setting of said variable low compressor (LCVV ref), acceleration/deceleration selector means (150) responsive to low pressure compressor speed (N₁) for generating a N₁ lock signal, such that the corrected value of N₁ lock signal restricts the acceleration and deceleration of the engine to a constant N₁ value for all positions of said variable vane, a summer (152) responsive to the difference of said selected N₁ lock signal and actual N₁ for producing a LCVV trim signal, additional summer means (145) responsive to the difference of said LCVV trim signal and said LCVV reference signal for producing a LCVV target signal, said variable vanes responsive to said LCVV target signal for controlling said variable vanes for obtaining the desired thrust, and said engine control responsive to N₁ (circuit Z) for resetting said fuel regulating means for adjusting the amount of fuel being metered to said burner to return said N₁ to the steady state operating line (A).

2. The control system as claimed in claim 1 including a proportional and integral controller (154) for controlling the LCVV trim signal prior to being admitted to said additional summer means (145).

3. The control system as claimed in claim 2 including means for establishing the slew rate of said fuel regulating means (125) comprising a timer (156) responsive to altitude and Mach No. and the output of said accelerator and decelerator selector (150) and feedback means (162,160,166) responsive to the difference between said LCVV target signal and LCVV error signal.

4. The control system as claimed in claim 3 including a minimum value of the LCVV target signal and the maximum value of the LCVV target signal including a function generator (146) and function generator (148) responsive to N₁.

5. The control system as claimed in claim 4 wherein said active low compressor controller (ALCC) is also responsive to the total pressure of the air in the inlet of the engine, Mach No. and the total temperature of the air in the inlet of the engine.

6. A control system for controlling a gas turbine engine (210) for powering aircraft having a pair of spools comprising a high pressure turbine (214) attached to a high pressure compressor (212) and a low pressure turbine (222) attached to a low pressure compressor or fan (218), each of the pair of spools being aerodynamically coupled to each other, a burner (223) for combusting air and fuel for powering said high pressure turbine (214) and said low pressure turbine (222), and variable area vanes (236) for metering the air flow to said high pressure compressor, said control system comprising fuel regulating means (225) for metering the flow of fuel to said burner, and an engine control responsive to engine operating parameters including high pressure compressor speed (N₂) for controlling said fuel regulating means (225) and said variable area vanes (236) to operate said engine (210) during steady state engine operations on a steady state operating line (A), characterized by an active high compressor controller (AHCC) (W,X) responsive to a power lever setting (α) and N₂ for selecting and obtaining a desired thrust during engine transient conditions, said active high compressor controller (AHCC) including function generator means (240,242,244) responsive to power lever settings (α) and other engine operating parameters for producing a desired setting of said variable high compressor (HCVV ref), acceleration/deceleration selector means (248) responsive to high pressure compressor speed (N₂) for generating a N₂ lock signal, such that the corrected value of N₂ lock signal restricts the acceleration and deceleration of the engine to a constant N₂ value for all positions of said variable vane, a summer (250) responsive to the difference of said selected N₂ lock signal and actual N₂ for producing a HCVV trim signal, additional summer means (251) responsive to the difference of said HCVV trim signal and said HCVV reference signal for producing a HCVV target signal, said variable vanes responsive to said HCVV target signal for controlling said variable vanes for obtaining the desired thrust, and said engine control responsive to N₂ (circuit Z) for resetting said fuel regulating means for adjusting the amount of fuel being metered to said burner to return said N₂ to the steady state operating line (A).

7. The control system as claimed in claim 6 including a proportional and integral controller (252) for controlling the HCVV trim signal prior to being admitted to said additional summer means (251).

8. The control system as claimed in claim 7 including means for establishing the slew rate of said fuel regulating means (225) comprising a timer (256) responsive to altitude and Mach No. and the output of said accelerator/decelerator selector (248) and feedback means (262,260,266) responsive to the difference between said HCVV target signal and HCVV error signal.

9. The control system as claimed in claim 8 including a minimum value of the HCVV target signal and the maximum value of the HCVV target signal including a function generator (254) and function generator (256) responsive to N₂.

10. The control system as claimed in claim 9 wherein said active low compressor controller (ALCC) is also responsive to the total pressure of the air in the inlet of the engine, Mach No. and the total temperature of the air in the inlet of the engine.

## Patentansprüche

1. Steuersystem zum Steuern eines zwei Wellen aufweisenden Gasturbinentriebwerks (110) zum Antreiben eines Flugzeuges, mit einer Hochdruckturbine (114), die an einem Hochdruckverdichter (112) befestigt ist, und einer Niederdruckturbine (122), die an einem Niederdruckverdichter oder Fan (118) befestigt ist, wobei die beiden Wellen aerodynamisch miteinander gekuppelt sind, einem Brenner (123) zum Verbrennen von Luft und Brennstoff zum Antreiben der Hochdruckturbine (114) und der Niederdruckturbine (122) und Verstelleitschaufeln (130) zum Zumessen der Luftströmung für den Fan oder Niederdruckverdichter, wobei das Steuersystem eine Brennstoffregeleinrichtung (125) zum Zumessen des Brennstoffes für den Brenner und eine Triebwerkssteuerung aufweist, die auf Triebwerksbetriebsparameter anspricht, zu denen die Niederdruckverdichterdrehzahl (N₁) gehört, zum Steuern der Brennstoffregeleinrichtung (125) und der Verstelleitschaufeln (130) zum Betreiben des Triebwerks (110) während stationären Triebwerksbetriebes auf einer stationären Betriebskennlinie (A), gekennzeichnet durch eine aktive Niederdruckverdichtersteuereinheit (ALCC) (W, X), die auf eine Leistungshebeleinstellung (α) und auf N₁ anspricht, um einen gewünschten Schub während transienter Triebwerksbedingungen auszuwählen und zu erzielen, wobei die aktive Niederdruckverdichtersteuereinheit (ALCC) eine Funktionsgeneratoreinrichtung (140, 142, 144) aufweist, die auf die Leistungshebeleinstellungen (α) und andere Triebwerksbetriebsparameter anspricht, um eine gewünschte Einstellung des verstellbaren Niederdruckverdichters (LCVV ref) zu erzeugen, eine Beschleunigung/Abbremsung-Selektoreinrichtung (150), die auf die Niederdruckverdichterdrehzahl (N₁) anspricht, um ein N₁-Einrasten-Signal zu erzeugen, so daß der korrigierte Wert des N₁-Einrasten-Signals die Beschleunigung und die Abbremsung des Triebwerks auf einen konstanten Wert von N₁ für alle Positionen der Verstelleitschaufeln begrenzt, einen Summierer (152), der auf die Differenz des ausgewählten N₁-Einrasten-Signals und die aktuelle Drehzahl N₁ anspricht, um ein LCVV-Trimm-Signal zu erzeugen, eine zusätzliche Summiereinrichtung (145), die auf die Differenz des LCVV-Trimm-Signals und des LCVV-Referenz-Signals anspricht, um ein LCVV-Ziel-Signal zu erzeugen, wobei die Verstelleitschaufeln auf das LCVV-Ziel-Signal ansprechen, damit die Verstelleitschaufeln so gesteuert werden, daß der gewünschte Schub erzielt wird, und wobei die Triebwerkssteuerung auf N₁ anspricht (Schaltung Z), um die Brennstoffregeleinrichtung zum Einstellen der Brennstoffmenge, die dem Brenner zugemessen wird, rückzusetzen, um die Drehzahl N₁ auf die stationäre Betriebskennlinie (A) zurückzubringen.

2. Steuersystem nach Anspruch 1, mit einem PI-Regler (154) zum Steuern des LCVV-Trimm-Signals, bevor es der zusätzlichen Summiereinrichtung (145) zugeführt wird.

3. Steuersystem nach Anspruch 2, mit einer Einrichtung zum Festlegen der Nachführgeschwindigkeit der Brennstoffregeleinrichtung (125), die einen Zeitgeber (156) umfaßt, der auf die Höhe und die Mach-Zahl sowie auf das Ausgangssignal des Beschleunigung/Abbremsung-Selektors (150) anspricht, und eine Rückführungseinrichtung (162, 160, 166), die auf die Differenz zwischen dem LCVV-Ziel-Signal und dem LCVV-Fehler-Signal anspricht.

4. Steuersystem nach Anspruch 3, mit einem Minimalwert des LCVV-Ziel-Signals und dem Maximalwert des LCVV-Ziel-Signals und einem Funktionsgenerator (146) und einem Funktionsgenerator (148), die auf N₁ ansprechen.

5. Steuersystem nach Anspruch 4, wobei die aktive Niederdruckverdichtersteuereinheit ALCC außerdem auf den Gesamtdruck der Luft an dem Einlaß des Triebwerks, die Mach-Zahl und die Gesamttemperatur der Luft in dem Einlaß des Triebwerks anspricht.

6. Steuersystem zum Steuern eines zwei Wellen aufweisenden Gasturbinentriebwerks (210) zum Antreiben eines Flugzeuges, mit einer Hochdruckturbine (214), die an einem Hochdruckverdichter (212) befestigt ist, und einer Niederdruckturbine (222), die an einem Niederdruckverdichter oder Fan (218) befestigt ist, wobei die beiden Wellen jeweils aerodynamisch miteinander gekuppelt sind, einem Brenner (223) zum Verbrennen von Luft und Brennstoff zum Antreiben der Hochdruckturbine (214) und der Niederdruckturbine (222) und Verstelleitschaufeln (236) zum Zumessen der Luftströmung für den Hochdruckverdichter, wobei das Steuersystem eine Brennstoffregeleinrichtung (225) zum Zumessen der Brennstoffzufuhr zu dem Brenner und eine Triebwerkssteuerung aufweist, die auf Triebwerksbetriebsparameter anspricht, zu denen die Hochdruckverdichterdrehzahl (N₂) gehört, zum Steuern der Brennstoffregeleinrichtung (225) und der Verstelleitschaufeln (236) zum Betreiben des Triebwerks (210) während stationären Triebwerksbetriebes auf einer stationären Betriebskennlinie (A), gekennzeichnet durch eine aktive Hochdruckverdichtersteuereinheit (AHCC) (W, X), die auf eine Leistungshebeleinstellung (α) und auf N₂ anspricht, zum Auswählen und Erzielen eines gewünschten Schubes während transienter Triebwerksbedingungen, wobei die aktive Hochdruckverdichtersteuereinheit (AHCC) eine Funktionsgeneratoreinrichtung (240, 242, 244) aufweist, die auf Leistungshebeleinstellungen (α) und andere Triebwerksbetriebsparameter anspricht, um eine gewünschte Einstellung des verstellbaren Hochdruckverdichters (HCVV ref) zu erzeugen, eine Beschleunigung/Abbremsung-Selektoreinrichtung (248), die auf die Hochdruckverdichterdrehzahl (N₂) anspricht, um ein N₂-Einrasten-Signal zu erzeugen, so daß der korrigierte Wert des N₂-Einrasten-Signals die Beschleunigung und die Abbremsung des Triebwerks auf einen konstanten Wert von N₂ für alle Positionen der Verstelleitschaufeln begrenzt, einen Summierer (250), der auf die Differenz des ausgewählten N₂-Einrasten-Signals und die aktuelle Drehzahl N₂ anspricht, um ein HCVV-Trimm-Signal zu erzeugen, eine zusätzliche Summiereinrichtung (251), die auf die Differenz des HCVV-Trimm-Signals und des HCVV-Referenz-Signals anspricht, um ein HCVV-Ziel-Signal zu erzeugen, wobei die Verstelleitschaufeln auf das HCVV-Ziel-Signal ansprechen, damit die Verstelleitschaufeln so gesteuert werden, daß der gewünschte Schub erzielt wird, und wobei die Triebwerkssteuerung auf N₂ anspricht (Schaltung Z), um die Brennstoffregeleinrichtung zum Einstellen der Brennstoffmenge, die dem Brenner zugemessen wird, rückzusetzen, um N₂ auf die stationäre Betriebskennlinie (A) zurückzubringen.

7. Steuersystem nach Anspruch 6, mit einem PI-Regler (252) zum Steuern des HCVV-Trimm-Signals, bevor es der zusätzlichen Summiereinrichtung (251) zugeführt wird.

8. Steuersystem nach Anspruch 7, mit einer Einrichtung zum Festlegen der Nachführgeschwindigkeit der Brennstoffregeleinrichtung (225), mit einem Zeitgeber (256), der auf die Höhe und die Mach-Zahl und auf das Ausgangssignal des Beschleunigung/Abbremsung-Selektors (248) anspricht, und einer Rückführeinrichtung (262, 260, 266), die auf die Differenz zwischen dem HCVV-Ziel-Signal und dem HCVV-Fehler-Signal anspricht.

9. Steuersystem nach Anspruch 8, mit einem Mindestwert des HCVV-Ziel-Signals und dem Maximalwert des HCVV-Ziel-Signals und einem Funktionsgenerator (254) und einem Funktionsgenerator (256), die auf N₂ ansprechen.

10. Steuersystem nach Anspruch 9, wobei die aktive Niederdruckverdichtersteuereinheit (ALCC) außerdem auf den Gesamtdruck der Luft in dem Einlaß des Triebwerks, die Mach-Zahl und die Gesamttemperatur der Luft in dem Einlaß des Triebwerks anspricht.

## Revendications

1. Système de commande d'un turbomoteur (110) pour la motorisation d'un avion, comportant une paire le corps comprenant une turbine haute pression (114) attachée à un compresseur haute pression (112) et une turbine basse pression (122) attachée à un compresseur basse pression ou à une soufflante (118), chaque corps de la paire de corps étant couplé aérodynamiquement à l'autre, une chambre de combustion (123) pour brûler de l'air et du carburant afin d'énergiser la turbine haute pression (114) et la turbine basse pression (122), et des aubes à aire de passage variable (130) pour doser le flux d'air vers la soufflante ou le compresseur basse pression, le système de commande comprenant un moyen de régulation du carburant (125) afin de doser le débit de carburant vers la chambre de combustion et une commande du moteur répondant à des paramètres de fonctionnement du moteur incluant la vitesse (N₁) du compresseur basse pression, afin de commander le moyen de régulation du carburant (125) et les aubes à aire de passage variable (130), pour faire fonctionner le moteur (110), pendant des fonctionnements du moteur en régime permanent, sur une ligne de fonctionnement en régime permanent (A), caractérisé en ce qu'il comprend un appareil de commande de la géométrie active du compresseur basse pression (ALCC) (W,X), répondant à un réglage (a) de la manette des gaz et à la vitesse (N₁) pour sélectionner et obtenir une poussée désirée pendant des conditions transitoires du moteur, l'appareil de commande de la géométrie active du compresseur basse pression (ALCC) incluant des moyens à générateur de fonction (140,142,144) répondant aux réglages (α) de la manette des gaz et à d'autres paramètres de fonctionnement du moteur pour produire un réglage désiré des aubes variables du compresseur basse pression (signal de référence LCVVREF), un moyen sélecteur d'accélération/décélération (150) répondant à la vitesse (N₁) du compresseur basse pression pour produire un signal (N₁) verrouillé tel que la valeur corrigée du signal (N₁) verrouillé restreigne l'accélération et la décélération du moteur à une valeur (N₁) constante pour toutes les positions des aubes variables, un additionneur (152) répondant à la différence entre le signal de valeur (N₁) verrouillée sélectionné et la valeur effective (N₁) pour produire un signal de réglage (LCVVREG), un moyen additionneur supplémentaire (145) répondant à la différence entre le signal de réglage (LCVVREG) et le signal de référence (LCVVREF) pour produire un signal cible (LCVVCIBLE), les aubes variables répondant à ce signal cible (LCVVCIBLE) pour commander les aubes variables de manière à obtenir la poussée désirée, la commande du moteur répondant à la valeur (N₁) (circuit Z), en réajustant le moyen de régulation du carburant pour régler la quantité de carburant qui est dosée vers la chambre de combustion, afin de ramener la valeur (N₁ sur la ligne de fonctionnement en régime permanent (A).

2. Système de commande suivant la revendication 1 caractérisé en ce qu'il comporte un circuit de réglage proportionnel et intégral (154) pour commander le signal de réglage (LCVVREG) avant qu'il ne soit appliqué au moyen additionneur supplémentaire (145).

3. Système de commande suivant la revendication 2 caractérisé en ce qu'il comporte un moyen pour établir la vitesse de pivotement du moyen de régulation du carburant (125), comprenant une minuterie (156) répondant à l'altitude et au nombre de Mach et à la sortie du sélecteur d'accélération/décélération (150), et des moyens de réaction (162,160,166) répondant à la différence entre le signal cible (LCVVCIBLE) et le signal d'erreur (LCVVERR).

4. Système de commande suivant la revendication 3 caractérisé en ce qu'il comporte une valeur minimale du signal cible (LCVVCIBLE) et une valeur maximale du signal cible (LCVVCIBLE) déterminées par un générateur de fonction (146) et par un générateur de fonction (148) répondant à (N₁).

5. Système de commande suivant la revendication 4 caractérisé en ce que l'appareil dc commande de la géométrie active du compresseur basse pression (ALCC) répond égalemcnt à la pression totale de l'air à l'entrée du moteur, au nombre de Mach et à la température totale de l'air à l'entrée du moteur.

6. Système de commande d'un turbomoteur (210) pour la motorisation d'un avion, comportant une paire de corps comprenant une turbine haute pression (214) attachée à un compresseur haute pression (212) et une turbine basse pression (222) attachée à un compresseur basse pression ou à une soufflante (218), chaque corps de la paire de corps étant couplé aérodynamiquement à l'autre, une chambre de combustion (223) pour brûler de l'air et du carburant afin d'énergiser la turbine haute pression (214) et la turbine basse pression (222), et des aubes à aire de passage variable (236) pour doser le flux d'air vers le compresseur haute pression, le système de commande comprenant un moyen de régulation du carburant (225) afin de doser le débit de carburant vers la chambre de combustion et une commande du moteur répondant à des paramètres de fonctionnement du moteur incluant la vitesse (N₂) du compresseur haute pression, afin de commander le moyen de régulation du carburant (225) et les aubes à aire de passage variable (236), pour faire fonctionner le moteur (110), pendant des fonctionnements du moteur en régime Dermanent, sur une ligne de fonctionnement en régime permanent (A), caractérisé en ce qu'il comprend un appareil de commande de la géométrie active du compresseur haute pression (AHCC) (W,X), répondant à un réglage (α) de la manette des gaz et à la vitesse (N₂) pour sélectionner et obtenir une poussée désirée pendant des conditions transitoires du moteur, l'appareil de commande de la géométrie active du compresseur haute pression (AHCC) incluant des moyens à générateur de fonction (240,242,244) répondant aux réglages (α) de la manette des gaz et à d'autres paramètres de fonctionnement du moteur pour produire un réglage désiré des aubes variables du compresseur haute pression (signal de référence HVVREF), un moyen sélecteur d'accélération/décélération (248) répondant à la vitesse (N₂) du compresseur haute pression pour produire un signal (N₂) verrouillé tel que la valeur corrigée du signal (N₂) verrouillé restreigne l'accélération et la décélération du moteur à une valeur (N₂) constante pour toutes les positions des aubes variables, un additionneur (250) répondant à la différence entre le signal de valeur (N₂) verrouillée sélectionné et la valeur effective (N₂) pour produire un signal de réglage (HCVVREG), un moyen additionneur supplémentaire (251) répondant à la différence entre le signal de réglage (HCVVREG) et le signal de référence (HCVVREF) pour produire un signal cible (HCVVCIBLE), les aubes variables répondant à ce signal cible (HCVVCIBLE) pour commander les aubes variables de manière à obtenir la poussée désirée, la commande du moteur répondant à la valeur (N₂) (circuit Z), en réajustant le moyen de régulation du carburant pour régler la quantité de carburant qui est dosée vers la chambre de combustion, afin de ramener la valeur (N₂) sur la ligne de fonctionnement en régime permanent (A).

7. Système de commande suivant la revendication 6 caractérisé en ce qu'il comporte un circuit de réglage proportionnel et intégral (252) pour commander le signal de réglage (HCVVREG) avant qu'il ne soit appliqué au moyen additionneur supplémentaire (251).

8. Système de commande suivant la revendication 7 caractérisé en ce qu'il comporte un moyen pour établir la vitesse de pivotement du moyen de régulation du carburant (225), comprenant une minuterie (256) répondant à l'altitude et au nombre de Mach et à la sortie du sélecteur d'accélération/décélération (248), et des moyens de réaction (262,260,266) répondant à la différence entre le signal cible (HCVVCIBLE) et le signal d'erreur (HCVVERR).

9. Système de commande suivant la revendication 8 caractérisé en ce qu'il comporte une valeur minimale du signal cible (HCVVCIBLE) et une valeur maximale du signal cible (HCVVCIBLE) déterminées par un générateur de fonction (254) et par un générateur de fonction (256) répondant à (N₂).

10. Système de commande suivant la revendication 9 caractérisé en ce que l'appareil de commande de la géométrie active du compresseur basse pression (ALCC) répond également à la pression totale de l'air à l'entrée du moteur, au nombre de Mach et à la température totale de l'air à l'entrée du moteur.
